Europäisches Patentamt

**European Patent Office**

Office européen des brevets

(11) Publication number: **0 280 480**
**A2**

(12) # EUROPEAN PATENT APPLICATION

(21) Application number: **88301436.7**

(22) Date of filing: **19.02.88**

(51) Int. Cl.⁴: **F 02 F 7/00**
**F 02 B 77/02**

(30) Priority: **24.02.87 US 18226**

(43) Date of publication of application:
**31.08.88 Bulletin 88/35**

(84) Designated Contracting States:
**AT BE CH DE ES FR GB IT LI LU SE**

(71) Applicant: **CARBORIDE CORPORATION**
**2020 Lakeside Avenue**
**Cleveland Ohio 44114 (US)**

(72) Inventor: **Sahley, Lloyd William**
**2020 Lakeside Avenue**
**N.E. Cleveland Ohio 44114 (US)**

(74) Representative: **Allden, Thomas Stanley et al**
**A.A. THORNTON & CO. Northumberland House 303-306**
**High Holborn**
**London WC1V 7LE (GB)**

(54) **Ceramic wall structures for engines and method of manufacture.**

(57) Fusion bonded wall structures, particularly structures for use in components of internal combustion engines exposed to hot gases, are formed by fusion bonding molten particles zones of respective materials having significantly different coefficients of thermal expansion, for example, metals and ceramics and by using a transition zone of both such materials between the zones of the two materials. Such structures may be utilized to form passages and may be incorporated into a body by forming a wall structure on an aluminum coated core and casting metal about the core. The core is preferably first coated with aluminum before forming the wall structure. Structures of wear material and a metal may be formed in a similar manner for use in wear applications, e.g. valve guides. Porous materials such as insulating ceramics are sealed with aluminum to protect against penetration by undesirable agents.

FIG. 1

**Description**

## CERAMIC WALL STRUCTURES FOR ENGINES AND METHOD OF MANUFACTURE

The present invention relates to articles having wall structures, particularly wall structures defining passages, in which materials of significantly different thermal expansion characteristics are securely bonded together and more particularly to the bonding materials such as carbides and ceramics to metal to provide insulated or wear passageways and the like and to the method of manufacturing such wall structures. The present invention particularly relates to wall structures for use in internal combustion engines, and more particularly to combustion chamber components and the passageways associated with the combustion chamber and exhaust gases therefrom and the intake thereto.

The manufacturers of internal combustion engines have sought various ways to utilize the heat created in the combustion chamber, part of which does work and pushes down the piston, and the remainder of which passes through the piston, piston ring, cylinder liner wall, cylinder head, exhaust ports and exhaust manifolds, and to use aluminum in the place of ductile or grey iron. It is desirable to raise exhaust temperatures to minimize the presence of obnoxious emissions in the exhaust gases.

The engine manufacturers have tried varous ceramics to provide heat transfer barriers in association with various components of an engine for decreasing the heat rejection of the engine for the purposes of improved engine efficiency, for minimizing the transfer of heat to cooling systems, and for improving the combustion of the fuel. However, difficulties have arisen in utilizing ceramics as linings for exhaust ports and other parts of the exhaust system as well as in conjunction with other components associated with the combustion chamber, for example the piston head and fire deck. These difficulties have arisen because of the significant difference in the coefficient of expansion of ceramics and metal and because ceramics have poor thermal shock and mechanical stress characteristics. This makes it difficult to provide, for example, a ceramic lines exhaust passage to minimize loss of heat from exhaust gases and to raise the temperatures of the exhaust to obtain increased combustion of the fuel, including the obnoxious components of the fuel. If a cylinder head, either aluminum or ferrous, for example, utilizes a cast or sintered ceramic liner for insulating the exhaust port as shown in the prior art, it is difficult to obtain a good fit between the prior art ceramic liners and the casting surrounding liner to prevent leakage of exhaust gases to the cylinder head itself. Prior art cast liners also tend to shatter and crack under thermal and mechanical stresses associated with the casting of molten metal, manufacturing and operation of a engine. Accordingly, the application of ceramics to internal combustion engines for heat transfer barrier has been extremely limited in success.

Prior attempts to provide insulating ceramics for use with internal combustion engines, including exhaust ports, have included the following: (a) casting a metal cylinder head about a prefabricated ceramic liner (U.S. Patent 3,768,795); (b) casting metal about a prefabricated passageway liner comprising a refractory or heat insulating ceramic and a metal part forming a double layer structure which has metal portions about which the metal is cast to incorporate the liner into the casting (U.S. Patent 4,103,487 and U.S. Patent 3,949,552); (c) utilizing a prefabricated metal sleeve fitted about a sand core or filled with core sand as a casting core, the metal sleeve having a cast layer of molten silica on the sleeve or such a layer formed by the spraying of molten silica onto the sleeve (U.S. Patents 4,148,352 and 4,077,458); casting about a sintered ceramic encased in organic fibers, and a recognition of the problems of providing a ceramic or refractory liner which is resistant to thermal and mechanical stresses encountered during casting or in engine operation (U.S. Patent 4,526,824); (d) use of non-metallic composites, for example, a matrix of ceramic or glass reinforced by silicon carbide fibers to overcome the problems of low material strength and distortion which occurs when non-metallic materials are used as a component for individual combustion chamber components, the components contemplated apparently being manufactured as separate element or components for the engine (U.S. Patent No. 4,341,21).

Generally, it may be said that the prior art has basically utilized four types of thermal barrier designs for exhaust ports and manifolds; (1) the use of various types of coatings applied directly to passage walls of an already cast engine component utilizing a variety of ceramic materials or asbestos; (2) the use of insertable liners which are prefabricated and which are inserted into prefabricated engine parts with the liners being made of a single layer of heat resistant metal or a double layer of metal with air spaces or multiple layers of ceramic; (3) the use of cast-in-place liners which are a single metal layer or a single refractory or ceramic layer, or dual or multiple layers of metal and ceramic; (4) the use of ceramic layers cushioned by paper.

The disadvantages of using cast-in-place ceramic liners up to the present include a lack of good bonding with the metal and the separation, poor insulation, leaks and cracking of ceramic parts caused by the variable shrinkage and solidification of cast metal around the liner and the difference in thermal expansion of the liner and metal during engine operation and/or manufacture.

Single and double wall parts which are inserted in exhaust outlets and manifolds have been at a disadvantage because of the non-conformance of the external wall of the insert to the internal wall of the exhaust passageway. This results in poorly trapped airspace and with eventual loss of insulating ability because of the inability to seal-off the passageway wall.

Past coatings for providing insulating linings have been of little usebecause of the fragile nature of the epitaxial bonding of the ceramic. Engine parts get rough treatment during manufacture including damage from machining, heat treatment, and chemical operations, any of which may cause fractures, patching and/or chipping or ceramic parts. In some cases, severe damage of the engine is possible from chips of solid fired ceramic damaging a turbo charger, or being fed into crossovers into the intake manifold to cause damage to the piston, cylinder, piston rings and poppet valves.

It is an object of the present invention to overcome the disadvantages associated with the use of sintered or cast ceramic parts bonded to metal as a part of mechanical structures, such as internal combustion engines, so as to increase the temperature of combustion and exhaust gases to protect the various components from the increased temperatures.

It is further an object of the present invention to provide methods of manufacturing a new and improved thermal barrier wall structure, particularly for hot gas products of an internal combustion engine with the method being characterized by economics of fabrication and material used and at the same time providing an improved bonding of ceramic to metal, more specifically it is an object to improve components of an engine and then manufacture by melt-bonding a metal clad ceramic liner or wall structure to an engine component to provide a new improved component having a monolith of metal and ceramic or wear material.

A further object of the invention is to provide new improved manufacturing methods so that hot gas passages in automotive components can be readily formed with heat barriers around the passages by the use of basically conventional casting techniques.

## SUMMARY OF INVENTION

The present invention contemplates the forming of a wall structure, particularly a wall structure for use at elevated temperatures such as would occur in internal combustion engines, including highly efficient engines to protect parts of the engine and systems used therewith, for example, exhaust ports and manifolds, and combustion chamber components. The wall structures of the present invention include a wall structure comprising a heat transfer barrier which is a zone of insulating fusion bonded ceramic particles, a transition zone between the ceramic zone and a portion of the wall structure which is substantially 100% fusion or melt bonded metal particles with the transition zone gradually chaning in percentage from substantially 100% ceramic at the ceramic zone to substantially zero percent at the substantially all metal portion with the metal gradually changing in the transition zone from substantially 100% all metal to subsequently zero percent metal at the ceramic zone.

The present invention further contemplates such a structure in which the metal of the transition zone will be the same as or equivalent to the metal of a body portion for example the body of a cylinder head, for fusion and melt bonding purposes with the metal adjacent to the transition zone preferably being a melt of the metal of the body portion and the metal of the transition zone with the material of the ceramic zone and transition zone being fusion bonded particles.

In accordance with a preferred aspect of the present invention an article comprising a wall structure for providing a heat transfer barrier is monolithically formed by spraying molten particles of ceramic to form zones of substantially all ceramic and of substantially all metal with a transition zone in between which gradually changes between 100% ceramic and substantially zero percent metal to 100% metal and substantially zero percent metal.

The invention further contemplates a wall structure as in the next preceding paragraph in which the transition zone terminates in an all metal zone which is melt bonded to an additional body of metal cast onto the metal zone of wall structure and a novel method of making such a structure.

The present invention also contemplates providing wall structures, particularly wall structures for passageways, such as, a valve guide passage or an exhaust port for an internal combustion engine, where the internal portion of the passage is formed by sprayed molten particles of wear material or ceramic, and in which a wear material or ceramic zone about the passage is bonded to a part which is all metal by a transition zone which gradually changes from substantially all ceramic or wear material to substantially all metal with the particles of the wear material zone or ceramic zone being fusion bonded particles of powders of the ceramic or wear material and the transition zone being a zone formed by the spraying of a mixture of molten particles of wear material, or ceramic, and metal. It is contemplated that both wear passageways and insulating passageways may be formed or manufactured by spraying of molten particles of the various materials onto a core or investment master for forming the passageways and then casting a metal body about the core of shell core for wall structures to be exposed to hot gases, such as the hot gases from a combustion chamber of an internal combustion engine. For ceramics, the ceramic zone is of a ceramic material, preferably zirconium oxide for an insulating wall structure. The sprayed molten particles of zirconium oxide form a heat transfer barrier with the ceramic material being preferably coated by a sealing coat of aluminum or other suitable sealing material, which may also form the wall of a passageway, for sealing the insulating ceramic against penetration of hot gases, such as are present in an exhaust system and preferably to provide a heat reflecting coating, for purposes such as providing a highly efficient engine operating at elevated combustion temperatures as compated to convential engines, or merely raising the exhaust temperatures to obtain better combustion of obnoxious components.

The present invention is described hereafter with a reference to the drawings which constitute a part of the description for all matter shown or described therein an in which,

Fig. 1 is a fragmentary cross-section of a cylinder head showing an exhaust port and an exhaust valve;

Fig. 2 is an enlarged view of a portion of the wall structure indicated by the circular arrow 2 on Fig. 1 showing in detail the wall structure of the exhaust port;

Fig. 3 is an elevational view of an investment master used for in manufacturing the wall structure of fig. 3 with portions of the wall structure prior to casting thereon;

Fig. 3A is an enlarged sectional view of a portion of the investment master showing coating for forming a valve seat as part of the wall structure coatings on the investment master of Fig. 3.

Fig. 4 is an enlargement of a cross-section of the wall structure and core of Fig. 3 taken along line 4-4 of Fig. 4;

Fig. 5 is an enlarged cross-sectional diagrammatic view of coatings on the investment master of Fig. 3 taken along line 5-5 of Fig. 5 and showing coarings for forming the wall structure for the exhaust port and valve guide shown in Fig. 1.

Fig. 6 is a micrograph showing the lunticular structure of fused powders resulting from the use of preferred powders.

Fig. 7 is a micrograph of a bond between an aluminum coating and zirconia.

Fig. 8 is a map of aluminum showing the penetration of an aluminum coating into zirconia at 400 X.

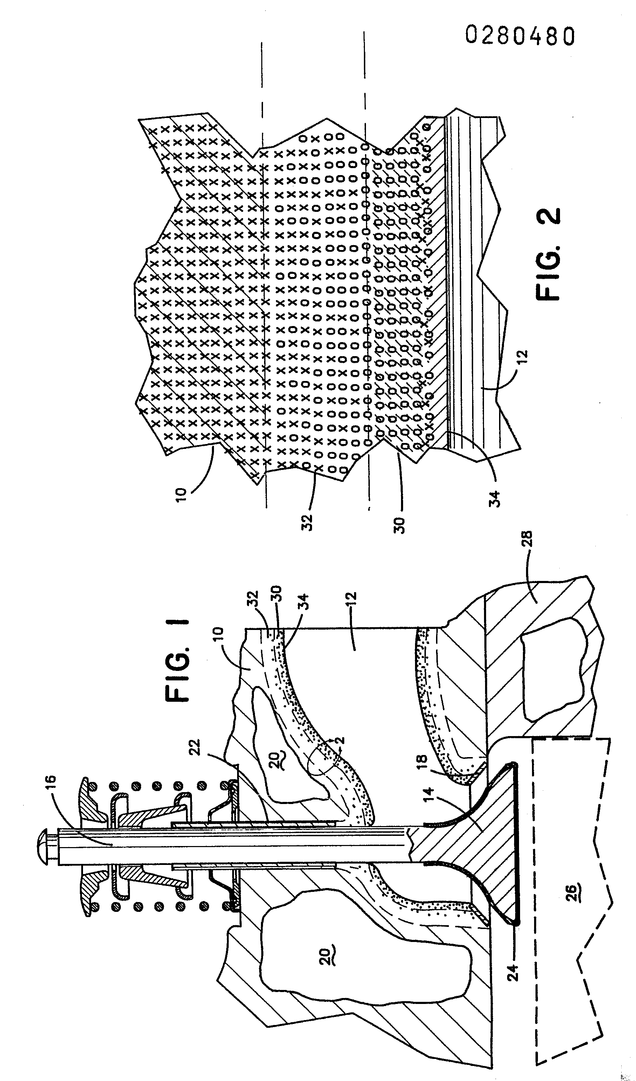

Referring to Fig. 1 of the drawings, the figure is a fragmentary showing of the cylinder head an internal combustion engine and illustrates a preferred embodiment of one aspect of my invention in the form of a wall structure for an exhaust port of a cylinder head10 of the internal combustion engine. The cylinder head 10 includes an exhaust port 12 and an exhaust valve 14. The valve 14 has a valve stem 16 and the valve cooperates with a valve seat 18 at the entrance to the exhaust port 12. Cylinder had 10 is shown as including conventional cooling passages 20.

As illustrated, the valve stem 16 extends upwardly through a conventional valve guide 22 in a passage of the cylinder head 20 to cooperate with a rocker arm not shown, for operating the valve 14. The valve 14 controls the connection of the exhaust port 12 to the combustion chamber 24 of the engine which, also includes a piston 26which operates in an engine block 28.

In accordance with the present invention, the wall structure about the exhaust port 12 comprises a ceramic zone 30 of fusion bonded particles for providing a heat barrier about the port for reducing or minimizing the transfer of heat between the exhaust port and the cylinder head. The ceramic portion, part, or zone 30 blends into a zone 32 of fusion bonded ceramic and metal particles to provide a transition zone of fusion bonded particles of ceramic and metal which changes from the substantially 100% ceramic at the ceramic zone 30, to a mixture of ceramic and metal with the ceramic in the transition zone 32 gradually changing from substantially 100%to zero percent and with the metal in the transition zone gradually changing from zero percent at the ceramic zone to 100%. This gradual transition from ceramic to metal provides a transition or gradient zone which is strongly and monolithically bonded with the ceramic zone and with the 100% metal part of the transition zone.

In the preferred practice of the invention, the transition zone 32 is also strongly bonded at the metal side thereof to the cylinder head body by a melt of the metal side thereof to the cylinder head body by a molt of the metal of the transition zone and the metal forming the body of the cylinder head. However, the metal at the metal side of the transition may also be fusion bonded to the metal of the cylinder head body of only a lesser bond is required or if a more convenient method of fabrication for the application. However, melt bonding is preferred in internal combustion engines where possible. When fusion bonding is used the surface of the casting must be agressively grit blasted with, for example oxide grit, to expose metal and coating should be done immediately, so as to eliminate formation of oxides. When a melt is used to bond the transition zone metal to the cylinder head, the melt of the two metals penetrates the interstices of the transition zone and a monolithic structure of the metal of the cylinder head and the transition zone 32, and the ceramic zone 30 results. When the transition zone is only fustion bonded to the body of the cylinder head, a monolithic structure is formed but the bond of molten particles to the ceramic layer is basically a fusion bond obtained by spraying molten particles of a metal onto a solid metal article, or component.

When the metal is cast about a wall structure to provide a melt bond, the ceramic zone will form a heat transfer barrier for the heat of the cast metal, not only to assist in forming a strong melt bond between the cast metal and the metal used in the transition zone, but will prevent casting cold shuts. This assists in obtaining a good melt of casting metal and metal of the transition zone. Under circumstances in which it is not desired to insulate the casting, the cast metal could be cast directly onto a ceramic (no transition zone, etc.) for the purposes of preventing cold shuts.

In addition to the foregoing, the ceramic zone 30 is preferably sealed with a coating 34. The sealing coating 34 is composed of aluminum with a thin skin on its exposed side of aluminum oxide when it is designed to protect the ceramic at elevated temperatures against penetration of deleterious gases, vapors, or fluids. The coating is formed by fusion bonding a coating of aluminum to the ceramic. Preferably, the aluminum coating is then heated in an atmosphere of argon, helium, or nitrogen, always with hydrogen present, under pressure, for example, a pressure of at least about 2 or more atmospheres to form a melt of the aluminum and improve its penetration into the interstices of the ceramic. The aluminum coating will then, when exposed to heat and oxygen, preferably during the manufacturing operation, form a thin skin of aluminum oxide on the passageway surface of the alumium coating. This sealing coating of aluminum and alumina also functions as a heat reflecting lining for exhaust port 12 as well as providing a coating for sealing the relative porous ceramic of the ceramic zone 30 to block the penetration of hot gases which include oxygen from the exhaust port 12.

An oxide layer should not be formed before the aluminum coating is melted in to seal the ceramic or it will intefere with the sealing of the ceramic. The heating in the presence of hydrogen will prevent the formation of the oxide and allow the oxide layer to be formed by heating in a hot air kiln at 1000 - 1100 C. The exhaust of an internal combustion engine also normally includes various corrosive of deleterious products which are detrimental to either the metal or ceramic of the wall structure of the exhaust port or both.

Fig. 2 is a sectional enlargement of the wall structure of the port 12 to better illustrate the wall structure. The ceramic zone is cross-hatched to indicate that the zone is of a ceramic such as zirconium oxide of aluminum oxide. However, tests to date indicate that zirconia performs better than alumina to provide a heat transfer barrier and higher heat rejection in high temperature applications.

The markings of X and O along various lines in the transition zone 32 of Fig. 2 generally and illustratively indicates the relative proportion of ceramic and metal along a line of the zone as the zone gradually changes from ceramic at the start of the transition zone to all metal at the end of the zone. The metal of zone 32 in Fig. 2 is indicated by X's and the ceramic is indicated by O's. The number of X's and O's along the lines of the marking in the transition zone indicate the approximate relative proportions of metal and ceramic along each line of markings. The horizontal dashed lines A and B of Fig. 2 indicate the general extent of the transition zone 32. The preferred insulating ceramic is zirconium oxide for the exhaust port 12 as well as for other components exposed to combustion or exhaust temperatures of an internal combustion engine although other ceramics whose powders may be sprayed in molten form, for example, alumina, or alumia titania might by utilized. The metal of the transition zone 32 is preferably the same as, or similar, or equivalent to the metal of the cylinder head or other component, for the purposes of melt bonding or plasma spraying. When a cast cylinder head is of aluminum, (casting aluminum normally contains silica), the metal of transition zone is preferably aluminum. If the cylinder head is ferrous, e.g., for ductile or gray iron, the preferred metal for forming a strong monolithic bond between the transition zone and the cylinder head metal is iron, a ferrous metal. When ferrous alloys as being cast, the transition zone preferably has iron in the initial metal of the transition and subsequently changes to the alloy being cast so that at the metal side of the transition zone it is all alloy.

In the case of the aluminum sealing coating 34, a transition zone from aluminum to ceramic is not believed to be necessary for most hot gas passageways or elevated temperatures such as present in the exhaust passage gases of internal combustion engines because of the relative thinness of the required aluminum coating, and because it is desirable to melt the aluminum into the ceramic to effect a tight seal.

It may be feasible as a lower cost engine design to form a non-ceramic valve guide as an economy and to manufacture the valve guide and valve seat at the time of forming the insulated exhaust port. This is an economy of manufacturing, and to provide better concentricity between the valve guide and valve seat.

It will be noted that the aluminum sealing coat and ceramic do have juncture which is more in the nature of a boundary than the transition zone and the ceramic or metal but it will also be noted that the metal of the coating penetrates into the interstices of the ceramic zone so that there is no singular bound line.

The ceramic zone, has a thickness of preferably from about .005inches to about .010 inch thick while the transition zone thickness is preferably about .005 inches to about .06 inches but larger if needed. For a plasma sprayed thermal barrier of ceramic, e.g., zirconia, the minimum desired porosity of the ceramic is at least 20% and preferably about 30-35%. If the insulating wall structure of the present invention is used with parts of an engine or exhaust systems where the wall structure is to be both insulating and wear resistant, or strengthened, the density of the ceramic zone may be increased so that the zone has a lower porosity as a trade-off between insulation and wear-resistance, or strength characteristics.

The thickness of the ceramic zone will depend upon the heat barrier characteristics of the ceramic used as well as the temperature gradient desired across the ceramic zone. The thickness of the transition zone also depends in part upon the metals and ceramics being used, particularly, the relative coefficients of thermal expansion of the ceramic and the metals in the transition zone and the article body. In each case, the proper thickness may be determined empirically to provide the necessary characteristics for the monolithic wall structure desired. It has been found that the transition zone, between a ceramic layer and a metal layer, of between about .020 inch to about .050 inch is normally sufficient for engine exhaust systems.

With respect to the aluminum coating 34, the coating need only be sufficiently thick to form a coating with a good bond to the ceramic and in the case of porous ceramics used at elevated temperatures, the sealing coat has preferably an oxide skin on the surface of the metal. The total thickness of an aluminum sealing coat for the exhaust port 12 and other applications requiring such a sealing coat may be for from about .003 inch to about .015 inch with the outer skin of alumina being about 2-4 microns thick.

The valve stem guide of figure 1 is illustrated as being a conventional valve guide. However, I have discovered that this valve guide may be formed by the proper spraying of molten particles of metal and a wear material. In accordance with the invention, the metal and wear material molten particles may be sprayed during the formation of the wall structure for the exhaust port. Similarly, the valve seat for the valve may also be formed at the same time as the exhuast port and may comprise an impact resistance metal such as alloy steel, Inconel, or Stellite. The wear coating, for example, may be tungsten carbide or a tungsten carbide-cobalt lining, or a ceramic formed by plasma spraying, or a chemical vapor deposit or titanium carbide, titanium carbo-nitride or titanium nitride. Obviously various other valve guides of an engine can be formed in the same manner as the valve guide for the exhaust port 12.

In some areas of the engine, it may be desirable to protect the valve guide or a port, for example, a cold air intake port, from transferring heat from the cylinder head to the valve guide stem or the port. In such a case, the valve guide may be formed with a ceramic thermal barrier as in the case of the exhaust port. The valve guide for the exhaust valves normally will not be provided with such a thermal barrier since it is often desirable to allow the valve guide to transfer heat which may be transmitted along the valve stem to the cylinder head and cooling system. However, an insulating porting may be used as part of the wall structure for the air intake valve guide if needed.

In accordance with the present invention, the insulating ceramic lining and the transition zone can be formed on a prefabricated cylinder head by plasma spraying 100% metal on the surface of a preformed wall, e.g., of a cylinder head exhaust port, starting with 100% metal, continuing into a transition zone to gradually gradient to 100% ceramic and zero percent metal, and continuing with the ceramic zone until the necessary thickness is applied. If the sealing or reflective coating is also used it is then sprayed and may utilize a ceramic to aluminum transition zone if desired. This wall structure will be fusion bonded between the sprayed metal and the metal of the cylinder head and the transition zone will monolithicaly blend into the 100% ceramic insulating zone.

Similarly, the cylinder head passage for a valve liner can be formed on a prefabricated cylinder head by first spraying molten particles of a metal which is similar or the same as the cylinder metal for fusing or binding purposes onto the passage wall of the prefabricated cylinder head, continuing to spray molten metal and wear material powders, e.g., tungsten carbide powders, to form a transition zone in which the powder sprayed changes from 100% metal to 100% tungsten carbide or other wear surface material and then continuing with solely molten wear material until the wear portion is completed.

In manufacturing the structure of Fig. 1 in accordance with the preferred method of manufacture, an aluminum coating is initially formed by plasma spraying a coating of molten aluminum particles onto a sand core or investment masters of a different material such as wax, zinc or dipped-dried ceramic shells to provide a fusion bonded coating on the core. Such an aluminum coating has been found to provide a sealing coating for a sand core which minimizes the penetration of moisture into the sand core after curing so that the core will have a longer shelf life as well as more self integrity and much higher strength. The sand cores contemplated may be conventional cores of resin bonded sand or other types of conventional sand cores or investment masters. The spraying of molten particles may be done with a spraying plasma gun.

After the core is sprayed with aluminum to form a layer of aluminum 34, molten ceramic powders are sprayed to form the ceramic zone 30 and then molten ceramic and metal powders are sprayed to form the transition zone 32 from ceramic to metal. In forming the transition zones from all ceramic to all metal, a thin coating of powders having one ratio of ceramic to metal is sprayed followed by the spraying in a continuous manner of successive thin coatings of different ratios until the transition is complete from all of one material to all of the other.

The method may be performed by hand with the various ratios of powders premixed and in various hoppers, or mixing may be controlled at the gun or elsewhere using a propositional feed mechanism. The spraying may also be done by mounting the core, shell core, or investment master in a machine and holders where the spray gun and core, shell core or investment master are supported for relative movement having components along the horizontal, vertical and angular axes. In mixing at the guns, powders may be introduced in to the plasma stream of the gun in the correct proportions. The conventional guns use a shielding gas of argon or nitrogen for the plasma stream. This is desirable to protect against oxidation.

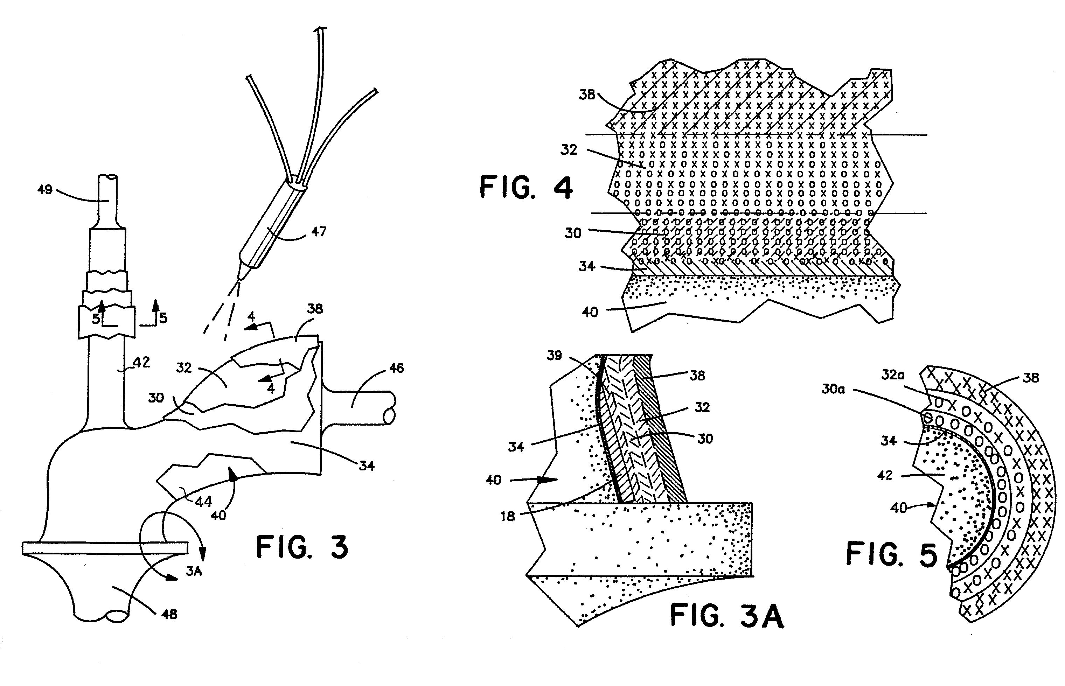

The cores used to manufacture a wall structure embodying the present invention need not be a sand core but may be an investment master for zinc or aluminum die casting, or wax, or cores of foam (plastic), of foam plus a dip slurry which is of silica or ceramic, lead or bismuth alloy, wax, or frozen mercury. In casting an aluminum cylinder head, a zinc investment master is preferably used as an alternative to a sand core. Such a zinc investment master is illustrated in Figure 3.

The preferred method for incorporating wall structures utilizing the present invention into the body of an article, is by casting. Referring to Fig. 3, the Figure illustrates a core 40 for use in casting the exhaust port 12 and a valve guide 22 into a cylinder head, the valve guide to be comprised of fusion bonded particles of a carbide wear material. The core 40 is provided with a portion 42 forming the cylinder head passage for the valve stem 10 and wear guide 22 and a main body portion 44 for the exhaust port 12 and the valve seat 18. The core is also provided with chucking portions 48,49 to enable the core to be chucked onto a rotating table for rotating the core about axis during the spraying of the core with molten particles to form the wall structures to be incorporated into a cast cylinder head.

The spraying may be done by hand or with a spray gun which is movable in a cross axis feed and a longitudinal feed and is mounted for universal angular movement.

With the zinc investment master, an aluminum coating 34 is first applied to the investment master in the same manner as described for the sand core to ultimately provide the wall surface for a passage, e.g., the exhaust port of a cylinder head. In Figure 3 the investment master has been designated by the reference numeral 40 and the plasma sprayed aluminum coating has been designated by the reference numeral 34 and is shown as covering the whole core. After applying the fusion bonded coating of aluminum by spraying successive passes of molten aluminum particles with a plasma spray gun 47, the aluminum molten particles sprayed by the gun may gradually change from 100% metal to 100% ceramic to form a transition zone, if desired. However, a transition zone is not believed necessary between the aluminum seal coating and the insulating ceramic zone and the spraying may be changed directly from aluminum to molten particles of ceramic. These are then sprayed in successive passes to form the insulating zone 30 as the insulating lining for the exhaust port. After the desired thickness of insulating lining for exhaust port. After the desired thickness of insulating ceramic has been deposited, the molten powders are then changed to a mixture or ceramic and metal to form the transition zone in successive passes by forming a thin layer with each pass. The percentage of ceramic particles gradually decrease and the percentage of aluminum particles gradually increase as the transition zone is formed. Preferably, each pass deposits a coating of about .0005 inch to .010 thick and the percentage is incremented with each layer. After the transition zone is formed and the powders sprayed are 100% metal, the spraying is continued to provide a fusion bonded cladding zone about the transition and ceramic zone of from about at least .005 inch to about 0.05 inch thick.

It is to be recognised that the zones of various materials are formed by successively depositing thin layers, for example, layers of .0005 to .010 inch thick, to form the zone. In the transition zone the proportion of the mixture of ceramic and metal, for example, may be incremented after each or multiple passes, depending on the thickness deposited by each pass and the strength of bond needed. The stronger the bond required, or the greater the difference in coefficients of expansion between the materials to be joined, or other problems, the proportions may be incremented so that the proportions will change less for each increment, of one pass or more, from as low as 1% change per pass to 25% change per pass.

Molten material or metallic/ceramic powders for forming the valve seat may also be applied as part of the wall structure on the core. Preferably the powders for the valve seat 18, which may be formed of molten particles of Inconel or other high temperature metal alloys are sprayed directly onto the aluminum coating of the core and a transition zone 39 between the valve seat material and the ceramic layer 30 is provided, as illustrated in Fig. 3A, to form the valve seat for the exhaust port. The valve guide wall structure is similarly formed on the core or investment master as a continuous part of the operation. In Fig. 3, the investment master valve guide portion is designated by the reference numeral 42. As the core or master is sprayed, particles of tungsten carbide or other wear coating material are sprayed on the aluminium coating, as a continuation of the coating of ceramic for the exhaust port, to form the wear zone 30a on the aluminum coating 34, see Fig. 5, followed by a transition zone 32a, which is sprayed as a continuation of the transition zone 32 and makes a gradual transition between the wear guide coating and aluminum so as to provide a cladding 38 of aluminum for melt bonding with the cast aluminum cylinder head. The cladding of aluminum for the exhaust port wall structure, as well as the transition zone, the ceramic zone and the aluminum coatings on the core extend to the part of the investment master for forming the passageway for the valve guide and the valve guide wall material cladding zone of metal forms a continuation of the same zone for the exhaust port passage. These coatings when terminating will be fusion bonded to the adjacent layers as a result of the spraying of molten particles of the respective coatings and the spraying of the powders may include a transition between the powder for the exhaust port and the respective powders of the valve guide if these differ sufficiently in their coefficients of thermal expansion.

After forming the wall structure the core or investment master is then melted, if of the type, for example, a zinc investment master, which is to be melted to provide a shell core for the casting of the aluminum cylinder head to surround the core. When the aluminum sealing coat is to be heat treated to provide a melt of the aluminum into the interstices of the zone 30 as earlier described, the melting of the investment master may be done simultaneously with the heat treatment.

After the core or shell core is ready for casting, it is incorporated into the body of the cylinder head by casting. During casting, the outer cladding of aluminum of the core or shell core will be melted by the molten aluminum being cast and the subsequent cast cylinder head will have a melt of the cast aluminum and the sprayed outer aluminum cladding which penetrates into the transition zone layer to form a strong bond between the particles of the transition zone and the aluminum body of the cylinder head. Depending on the temperature of the cast the melt may penetrate into the ceramic or wear area of the transition zone as has been determined by taking micrographs and chemical analysis of the aluminum casting in the transition zone. There will not be a definitive bond line between the outer cladding and the cast metal or with the transition zone. The transition zone itself will gradually blend into the melt of these materials with the melt having penetrated into the transition zone. Similarly, there is no defined boundary between the transition zone and the wear or ceramic material the adjacent zone.

The aluminum coating which forms the wall surface of the passageway and the ceramic or wear material lining will have a more limited boundary. However, this boundary is of fusion bonded particles with the aluminum particles penetrating into the ceramic zone and pores therein, as described above to provide a relatively strong bond. Prior to casting about the core investment master it will have been treated as described to melt the aluminum to seal the porosity of the ceramic. Tests have been made with the core heated in an argon, nitrogen or helium atmosphere for from about 2 to about 4 hours at a temperature of 1200° Fahrenheit prior to casting. This is sufficient to effect a melt of the coating 34 into the interstices of the ceramic lining to strengthen the bond between the ceramic and the aluminum and to better seal the relatively porous ceramic from the hot gases. The aluminum sealing coat will maintain its integrity during this heating with the melting of the zinc investment master even though the heating is at a temperature near the melting point of aluminum because of mechanical bonding due to adhesion and surface tension.

It will be understood that while zirconium oxide is the preferred insulating ceramic, other ceramics, for example, aluminum oxide, titanium oxide, magnesia/zirconate and other oxides may be utilized. Similarly, if the operating conditions are such that the gases within the passageway will not adversely effect the metal or ceramic, the seal coating of aluminum may be eliminated except as it is desirable to seal the core or investment master. It will be noted that, in case of a sand core and other types of cores, the aluminum coating provides a good coating for receiving sprayed molten particles of ceramic or wear material as compared to sand and various other core materials which are conventionally utilized in casting.

While the aluminum sealing coat has been described in connection with one application, it is to be understood that an aluminum sealing coat may be generally used to protect materials of structures against the action of and/or penetration by various agents and may also be applied to preformed structures if the structures will bond or can be prepared to bond with molten sprayed particles of aluminum. For example, a metal wall may be protected by aggressively abrading its surface as by grit blasting to provide a roughened surface with voids and plasma sprayed molten particles which form a bond therewith which can be strengthened by heat treating as described. While the applications described may utilize a heating in the argon or nitrogen or both inert atmospheres with hydrogen added to act as a getter for oxygen for from about 2 to 4 hours, the heating for other applications may require longer periods. Also the time periods for forming the aluminum oxide may vary. Moreover, over the material being protected may be a porous material such as molybdenum or a titanate. While aluminum has been used as the sealing material other sealing metals may be zirconium with a subsequent skin or zirconium oxide, titanium, tantalum, columbium or other metals which will form an oxide after beingmelted in hydrogen and an inert gas. However, the melting points of these materials are much higher than aluminum and the forming of the initial fusion bond as well as the oxide is, accordingly, more difficult to handle and apply because of the higher temperatures involved.

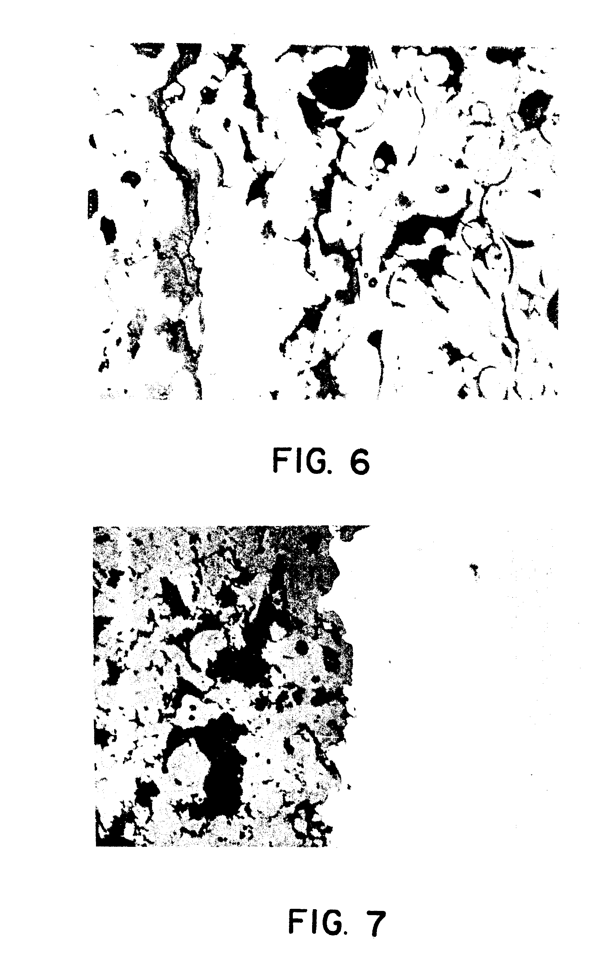

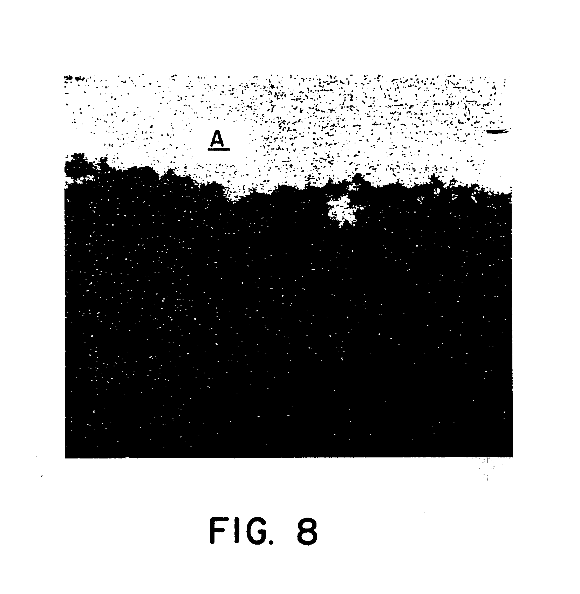

Necessary to the making of a ceramic or metal layer which can be expanded and contracted up to 3500° F, (less than dielectric melting point) without cracking or spalling off the substrate, I have found it preferable to sieve powders in oblong rough "long potato" shapes and/or arrow-head shapes rather than orderly spheres of the same size. I provide a range of powders in one batch from 10 microns in size up to 100 microns. By increasing gas pressures and velocities of the powder plus providing a plasma field of up to 100 KW around a .125 inch diameter plasma stream (5 million to 10 million watts per square inch of plasma area), many particles turn into tear drop shaped spheres of various sizes. Other particles splat and form a lenticular shape. The combination of spheres, lenticular plates which will slip over each other when heated, and a porosity of 20 to 45%, the structure created will take sharp impacts without cracking. When using a gradient structure also between layers of different coefficients of expansion, ceramics may be brought to white heat, and dropped in water without delaminating, spalling, cracking or shaling, See Fig. 6 for the lenticular structure; and Fig 7 for the porosity shown by a Scanning Electron Microscope. Fig. 7 is a micrograph of a bond in accordance with the invention, between aluminum as coating 34 and zirconia. The micrograph also illustrates the desired porosity. In Fig. 7 the aluminum is the white area at the interface (left side) of the ceramic 30. Fig. 8 is a scanning electron map of aluminum A distribution at 400 X showing the penetration of the aluminum 30 (white) into the zirconia and the sealing of the surface the pores (the white specks in the black and the black specks in the white in the micrograph are electron scatter). The zirconia has 7% yttria. In Fig 6 the material is a zirconia, Ni-Cr transition in accordance with the invention and shows structure earlier described which is typical of the structure of coatings utilizing the present invention.

As used in this application "fusion bonded particles" is intended to describe particles which are bonded together as in plasma spraying where surface portions of the particles are molten although the centers thereof are not truly melted, Melt bonded means a metal which has formed a bond with another material after being completely melted or is between two metals where both metals have been melted to form a melt of the metals in making the bond. It will be further understood that the transition in the applications described will normally have a limited extent which is all metal at the metal side of the zone.

In addition, Figs. 2 and 4 are diagrammatic in the sense that the nature of the penetration of the materials of one zone or coating as described is not completely illustrated.

From the foregoing it may be seen that the invention provides an article comprising a fusion bonded wall structure having separated first and second parts or zones of fusion bonded materials of types having significantly different coefficients of thermal expansion, e.g., a metal part or zone and a ceramic part or zone, and a transition zone fusion bonded with and between the two, the transition zone of fusion bonded particles being substantially 100% of the material of the first part at the first part and gradually changing substantially none of the material of the first part to substantially 100% of the material of the second part whereby said transition zone gradients from substantially none of said second material at said first part to substantially 100% of said second material.

The invention further provides a method for forming a wall structure of an article for use at high temperatures such as occurs in the combustion chambers and cylinder heads of internal combustion engines comprised of zones of different type materials having widely different coefficients of expansion, one of material usually being a metal and the other a ceramic to provide a heat barrier with the wall structure comprising a first wall portion or zone of one fusion bonded to a second wall portion or zone of a different material having a widely different coefficient of expansion by a transition zone comprised of both materials, which method comprises the steps of first forming one of the wall portion of zones by spraying molten powders of one of the different type materials onto a substrate or wall surface of a body, for example on a core, shell core, or cylinder head surface, to form one of the wall portions by the fusion bonding of the material sprayed and then forming the transition zone by spraying a mixture of molten powders of the first sprayed powder and the the powder of the other type of material onto the first formed portion or zone beginning with substantially 100% of the first sprayed powder and substantially zero percent of the powder for the other wall portion and gradually changing the mixture sprayed to 100% of the powder for the other type of differentr material by gradually decreasing the percentage of the first powder sprayed while increasing the percentage of the other powder to fusion bond the powder sprayed to form the transition zone and spraying molten powders to form the second of the wall portions or zones.

Still further, the invention provides a structure of a material having a melting point over about 1500° F sealed against contact with a particular agent to which the material may be exposed and a method of sealing the structure which comprises the steps of providing the structure to be sealed with a surface having a thin coating of aluminum particles fusion bonded to said material of the structure, heating the aluminum on the structure to cause the aluminum to wet the material adjacent the inner side of said aluminum to wet the material adjacent the inner side of said aluminum coating by heating the structure with the fusion bonded aluminum coating thereon in an inert atmosphere including hydrogen thereon at a temperature sufficient to cause the melting of the aluminum and the wetting of said material so as to obtain a mechanical bond between the material and aluminum coating, removing the structure with the coating thereon and exposing the outer side of the aluminum coating to heat and oxygen to form an oxide skin on the outer side thereof.

## Claims

1. An article comprising a bonded wall structure of first and second materials of significantly different coefficients of thermal expansion, said wall structure having a first part of fusion bonded particles of said first material and a transition zone on at least one side of said first part and fusion bonded with said first part, said transition zone comprising fusion bonded particles of said first and second materials and being substantially 100% of said first material at said first part and gradually changing to substantially none of said first material whereby said transition zone gradients from substantially none of said second material at said first part to a part of substantially 100% of said second material.

2. An article as claimed in claim 1, wherein said first material is a ceramic material having a melting point above 3500° F and said second material is a metal.

3. An article as claimed in claim 2, herein said ceramic is zirconium oxide and said metal is a ferrous material.

4. An article as claimed in claim 2, wherein said metal material is aluminum and said ceramic is zirconium oxide.

5. An article as claimed in claim 2, wherein said ceramic is an insulating ceramic having a melting point of at least 3500° F.

6. An article as claimed in claim 1, wherein said first material is a wear material and said second material is a metal.

7. An article as claimed in claim 5, in which said first part of ceramic has a zone of sealing material fusion or melt bonded to a side thereof for sealing said ceramic against penetration by hot gases.

8. An article as claimed in claim 3, in which a zone of aluminum is melt of fusion bonded to a side of said zirconium oxide zone and the zone of aluminum has a skin of aluminum oxide thereon to seal zirconium oxide against hot gas.

9. An article as claimed in claim 2, wherein said article comprises a body incorporating said wall structure, said body being of additional metal material melt or fusion bonded to the metal side of said transition zone.

10. An article as claimed in claim 6, wherein said article comprises a body incorporating said wall structure, said body being of additional metal material melt of fusion bonded to the said metal part at one side of said transition zone.

11. An article as claimed in claim 9, in which said first part is a ceramic zone providing a heat transfer barrier.

12. An article as claimed in claim 9, in which said wall structure is incorporated in a body of a component for an internal combustion engine and said wall structure has a portion thereof exposed to hot gases of the combustion engine, said wall structure further comprises a thermally bonded zone of aluminum particles fusion or melt bonded to a second side of said first part to provide a sealing layer against the penetration of the hot gases.

13. An article as claimed in claim 12, in which said ceramic is zirconium oxide and said metal and said additional material are ferrous.

14. An article as claimed in claim 12, in which said ceramic is zirconium oxide and said metal and said additional material are aluminum.

15. An article as claimed in claim 12, in which said wall structure defines a passage for the exhaust gases of an internal combustion engine.

16. An article as claimed in claim 15, in which said ceramic is zirconium oxide and said metal and said additional material are ferrous.

17. An article as claimed in claim 15, in which said ceramic is zirconium oxide and said metal and said additional material are aluminum.

18. A method for forming a wall structure of an article having a first portion of a first material bonded to a metal second portion by a transition zone with said first material having a relatively low coefficient of expansion as compared to said metal, which method comprises the steps comprising the steps of forming a first one of said portions by spraying molten powders one of said powders to provide one of said first and second portions, and forming the transition zone by spraying a mixture of molten powders of said material and metal onto said one of said portions beginning with substantially 100% of said one of said powders and substantially zero percent of the other of said powders and gradually changing the mixture sprayed to 100% of the other of said powders by gradually decreasing percentage of said one powder while increasing the percentage of the other powder to form said transition zone and the other of said first and second portions.

19. A method as claimed in claim 18, in which said first material is a ceramic.

20. A method as claimed in claim 19, in which said first material is zirconium oxide to provide a first portion constituting a thermal barrier for the transfer of heat.

21. A method as claimed in claim 18, including the steps of incorporating said wall structure into a metal body by using a core or shell core incorporating said wall structure with said second portion being exposed and casting the metal with said portion being exposed and casting the metal body about said core or shell core to form a melt of the cast metal and the metal of said second portion to bond the wall structure into the body.

22. A method as claimed in claim 18, in which said wall structure is incorporated into a metal body by casting the metal of said body onto said second portion of the wall structure to form a melt of at least a portion of said second portion to bond the wall structure into the body.

23. A method as claimed in claim 18, in which a core for forming the wall structure is first prepared and has sprayed thereon molten particles of aluminum to form an aluminum coating on the core and in which said first material is a ceramic which is first sprayed onto the coating of aluminum followed by the spraying of molten powders to form the transition zone of the wall structure and the metal portion of the wall structure and in which the wall structure is incorporated into a body of metal by casting the metal onto the metal portion of said wall structure to form a melt bond with at least a portion of the metal of the wall structure to monolithically incorporate the wall structure into the body.

24. A method as claimed in claim 23, wherein said first material is zirconium oxide and the metal of said body and said second portion are ferrous.

25. A method as claimed in claim 23, wherein said first material is zirconium oxide and the metal of said body and said metal portion are aluminum.

26. A method as claimed in claim 18, in which said first material is a carbide wear material.

27. A method of sealing a structure of a material having a melting point over about 1500°F against contact with a particular agent to which the material may be exposed comprising the steps of providing a structure of said material having a surface with a thin coating of aluminum particles fusion bonded to said material melting the aluminum of said coating to cause said aluminum to wet the material adjacent the inner side of said aluminum coating by heating the structure with the fusion bonded coating thereon in an inert atmosphere with hydrogen thereon at a temperature sufficient to cause the melting of the aluminum and the wetting of said material so as to establish a mechanical bond between the material and aluminum coating, removing the structure with the coating thereon and exposing the outer side of the aluminum coating to heat and oxygen to form an oxide skin on the outer side thereof.

28. A method as claimed in claim 27, wherein the structure of said material and the aluminum coating is initially formed by the spraying of molten particles of aluminum and ceramic to form said structure with ceramic and aluminum coating being fusion bonded.

29. A method as claimed in claim 28, wherein said ceramic is an insulating ceramic.

30. A method as claimed in claim 27, wherein said structure is initially a structure having an abraded surface to enable the bonding of molten particles of aluminum thereto, and the initial step of said method comprises the spraying of molten particles of aluminum onto said structure to form said aluminum coating thereon.

31. A sand core for use in casting, said core having a coating which is applied to the core after the core is cured as a thin coating for fusion bonded aluminum.

0280480

FIG. 1

FIG. 2

0280480

FIG. 3

FIG. 3A

FIG. 4

FIG. 5

0280480

FIG. 6

FIG. 7

0280480

FIG. 8